Europäisches Patentamt

European Patent Office

Office européen des brevets

(19)

(11) Veröffentlichungsnummer: **0 006 244**
B1

(12) **EUROPÄISCHE PATENTSCHRIFT**

(45) Veröffentlichungstag der Patentschrift: 23.06.82

(51) Int. Cl.³: **H 04 M 11/06, H 04 J 3/00**

(21) Anmeldenummer: **79102028.2**

(22) Anmeldetag: **19.06.79**

(54) Nachrichtenübertragungssystem.

(30) Priorität: **20.06.78 DE 2827040**

(43) Veröffentlichungstag der Anmeldung:
**09.01.80 Patentblatt 80/1**

(45) Bekanntmachung des Hinweises auf die Patenterteilung:
**23.06.82 Patentblatt 82/25**

(84) Benannte Vertragsstaaten:
**AT CH FR GB IT SE**

(56) Entgegenhaltungen:
**DE - A - 2 110 795**
**DE - A - 2 329 214**
**DE - B - 1 250 897**
**DE - B - 2 729 689**
**GB - A - 1 203 768**

**NACHRICHTENTECHNISCHE ZEITSCHRIFT 29,**
**1976, Heft 3, Seiten 190—210**
**W. KAISER "Zukünftige Telekommunikation in**
**der Bundesrepublik Deutschland"**

(73) Patentinhaber: **SIEMENS AKTIENGESELLSCHAFT**
**Berlin und München**
**Postfach 22 02 61**
**D-8000 München 22 (DE)**

(72) Erfinder: **Strehl, Herbert, Dipl.-Ing.**
**Drozzaweg 15**
**D-8000 München 70 (DE)**

Nachrichtenübertragungssystem

Die Erfindung bezieht sich auf ein Nachrichtenübertragungssystem zur leitungsgebundenen und/oder drahtlosen Übertragung von Sprache, Musik, Text, Bildern oder Daten mit einem herkömmlichen Fernmeldenetz für analoge und gegebenenfalls auch abschnittsweise digitale Übertragung mit End- und Durchgangsvermittlungen (Analognetz), mit einem dem Analognetz überlagerten zusätzlichen Netz für reine Digitalübertragung mit eigenen Durchgangsvermittlungen (digitales Fernnetz), mit digitalen Endvermittlungen, die einerseits unmittelbar mit Analog-Digital bzw. Digital-Analog-Umsetzern aufweisenden digitalen Teilnehmerstationen und andererseits für jede aufzubauende Verbindung, die über den Endvermittlungsbereich hinausgeht, entweder mit dem digitalen Fernnetz unmittelbar oder mit dem Analognetz über Analog-Digital-bzw. Digital-Analog-Umsetzer bzw. bei Anschiuß an eine abschnittsweise Digitalübertragung über einen Codeumsetzer verbunden sind, und mit digitalen Teilnehmerstationen, die ständig oder zeitweise einen Teil des für die Sprachübertragung zur Verfügung stehenden Bitstroms für Datenübertragung und/oder Signalisierungszwecke ausnutzen.

Ein derartiges Nachrichtenübertragungssystem ist in der DE—C—2 729 689 beschrieben und ermöglicht über die digitalen Teilnehmerstationen neben dem Fernsprechen beispielsweise auch Bürofernschreiben, Fernkopieren, Fernsprech-Einzelbildübermittlung oder elektronische Briefübermittlung abzuwickeln. Dabei ist es möglich, daß ständig oder zeitweise ein Teil des für die Sprachübertragung zur Verfügung stehenden Bitstromes für Datenübertragung und/oder Signalisierungszwecke verwendet wird.

Aufgabe der Erfindung ist es, für diese Möglichkeit eine praktische Lösung anzugeben.

Ausgehend von einem Nachrichtenübertragungssystem der einleitend geschilderten Art wird diese Aufgabe erfindungsgemäß dadurch gelöst, daß in jeder digitalen Teilnehmerstation ein an die Stelle von Sprachbits Datenbits einfügender Unterkanal-Multiplexer vorgesehen ist, wobei die Anzahl derartiger Datenbits von der jeweiligen Datentaktfrequenz abhängt, dessen erster Eingang über einen Pulsmodulator mit einem Mikrofon, dessen zweiter Eingang über einen Pufferspeicher mit einem Dateneingang und dessen Ausgang mit dem Gesamtausgang verbunden sind, daß eine Datentakterkennung vorgesehen ist, deren Eingang mit dem Dateneingang und deren Ausgang über einen Synchronwortgenerator mit einem dritten Eingang des Unterkanal-Multiplexers verbunden sind, daß ein Präambelgenerator vorgesehen ist, dessen Eingang über eine Verzögerungsschaltung mit dem Gesamteingang, dessen erster Ausgang über einen Schalter und einen Pulsdemodulator mit einem Hörer und dessen zweiter Ausgang mit einem Datenausgang verbunden sind, und daß ein Präambeldecoder vorgesehen ist, dessen Eingang mit dem Gesamteingang, dessen erster Ausgang mit den Steuereingängen des Pufferspeichers und des Schalters und dessen zweiter Ausgang mit einem ersten Eingang eines Bit- und Worttaktgenerators, dessen zweiter Eingang mit dem Gesamteingang, dessen erster Ausgang mit den Takteingängen des Unterkanal-Demultiplexers, des Pulsmodulators und des Pulsdemodulators und dessen zweiter Ausgang mit einem zweiten Eingang des Präambelgenerators verbunden sind.

Bei dieser Lösung werden an definierten Stellen im Bitstrom an Stelle von Sprachbits Datenbits übertragen, wobei die Anzahl derartiger Stellen von der jeweiligen Datentaktfrequenz abhängt.

Diese Erfindung ist auch bei einem rein digitalen System in vorteilhafter Weise einsetzbar.

Für die praktische Realisierung mit Pulscodemodulation oder Pulsdeltamodulation ist es vorteilhaft, wenn ein Mikroprozessor und ein frei adressierbarer Festspeicher vorgesehen sind, die die Funktionen des Unterkanal-Multiplexers, der Datentakterkennung des Synchronwortgenerators, des Präambelgenerators, des Unterkanal-Demultiplexers, des Präambeldecoders und der Bit- und Worttaktsynchronisierung übernehmen.

Wenn auch diese Ausgestaltung in gleicher Weise für Pulscodemodulation und Pulsdeltamodulation geeignet ist, so ergeben sich für eine noch detailliertere Ausführung doch noch einige Unterschiede.

Da bei Pulscodemodulation ohnehin eine Wortstruktur vorhanden ist, kann die Unterkanalsynchronisierung von der Wortsynchronisierung abgeleitet werden. Die geringste Sprachbeeinflussung die simultane Datenübertragung entsteht dann, wenn für die Unterkanalbildung nur die Bits mit der niedrigsten Wertigkeit verwendetn werden; das sind bei der PCM-Norm des CCI beispielsweise das achte bzw. das siebte und das achte Bit eines Wortes.

Wenn auf der Empfangsseite an die Stelle der abgezweigten Datenbits Füllbits mit dem Wert "Null" oder "Eins" eingefügt werden, bleibt das im Sprachkanal entstehende Störgeräusch unabhängig vom jeweiligen Datensignal. Es wäre denkbar, mit Hilfe einer Logik diese Füllbits so einzufügen, daß für das Störgeräusch ein Minimum erreicht wird.

Bei der Deltamodulation muß auf der Sendeseite eine Unterkanalsynchronisierung eingefügt werden, damit auf der Empfangsseite der Unterkanal erkannt und die Daten abgezweigt werden können. Dies erlaubt allerdings eine freizügigere, der jeweils geforderten Datenübertragungsbitrate besser angepaßte Unterkanalbildung als bei Pulscodemodulation.

Bei Pulsdeltamodulation ist es vorteilhaft, wenn ein Pulsdeltamodulator vorgesehen ist, in dessen Rückkoppelschleife eine Einkopplung für die vom Mikroprozessor kommenden Daten angeordnet ist.

Bei dieser Anordnung bleibt der Einfluß des Unterkanals auf die Sprachqualität debonders klein, weil die Störwirkung der Datenbits vom Deltamodulator selbsttätig korrigiert wird.

Mit der erfindungsgemäßen automatischen Unterkanalbildung ist es möglich, die Übertragungskapazität des Unterkanals bei Bedarf so weit zu steigern, daß der Anteil des für die Sprache zur Verfügung stehenden Hauptkanals kleiner wird als der des Unterkanals. Beispielsweise 16 kbits/s für die Sprachübertragung und 48 kbit/s für die Datenübertragung. Es ist auch eine vollständige automatische Umschaltung des Sprachkanals auf Datenübertragung möglich.

Anhand von Ausführungsbeispielen wird die Erfindung nachstehend näher erläutert.

Fig. 1 zeigt eine erfindungsgemäße Anordnung,

Fig. 2 zeigt eine erfindungsgemäße Anordnung für Pulscodemodulation und Pulsedeltamodulation und

Fig. 3 zeigt einen Pulsedeltamodulator für eine Anordnung nach Fig. 2.

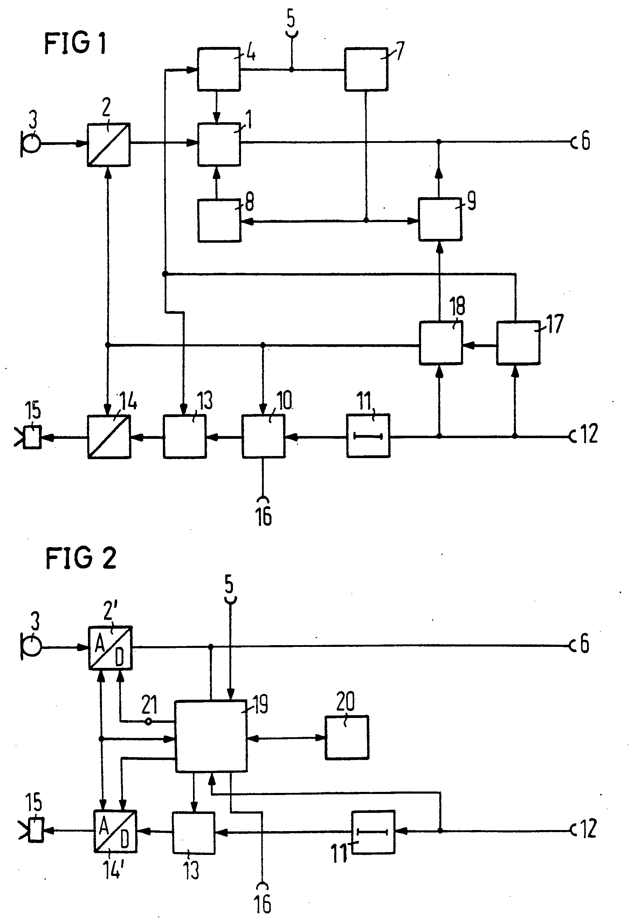

Fig. 1 zeigt eine erfindungsgemäße Anordnung mit einem Unterkanal-Multiplexer 1, mit einem Pulsmodulator 2, mit einem Mikrophon 3, mit einem Pufferspeicher 4 mit einem Dateneingang 5, mit einem Gesamtausgang 6, mit einer Datentakterkennung 7, mit einem Synchronwortgenerator 8, mit einem Präambelgenerator 9, mit einem Unterkanal-Demultiplexer 10, mit einer Verzögerungsschaltung 11, mit einem Gesamteingang 12, mit einem Schalter 13, mit einem Pulsdemodulator 14, mit einem Hörer 15, mit einem Datenausgang 16, mit einem Präambeldecoder 17 und mit einem Bit- und Worttaktgenerator 18.

Sind nur Sprachsignale zu übertragen, so werden einerseits die vom Mikrophon 3 stammenden Analogsignale im Pulsmodulator 2 in pulsmodulierte Signale umgesetzt, die über den Unterkanal-Multiplexer 1 zum Gesamtausgang 6 gelangen. Am Gesamteingang 12 eintreffende Signale gelangen über die Verzögerungsschaltung 11, den Unterkanal-Demultiplexer 10 und den Schalter 13 zum Pulsdemodulator 14, der sie in Analogsignale umsetzt, die dem Hörer 15 zugeführt werden.

Wird am Dateneingang 5 ein datenabgebendes Datenendgerät angeschlossen, so stellt die Datentakterkennung 7 fest, daß die Bitrate am Dateneingang beispielsweise 8 kbit/s beträgt und steuert den Synchronwortgenerator 8 derart, daß nur die für die Datenübertragung notwendige Bitrate im Unterkanal-Muliplexer 1 dem Sprachkanal entnommen wird. Gleichzeitig wird der nicht dargestellten, aber genauso aufgebauten Gegenstelle durch eine Präambel aus dem Präambelgenerator 9 mitgeteilt, welche Datenbitrate und welches Synchronwort im Unterkanel verwendet wird. Nach Erhalt einer Quitung über die Erkennung des Unterkanals von der Gegenstelle über den Präambeldecoder 17 beginnt der Pufferspeicher 4 seine Daten an den Unterkanal-Multiplexer 1 abzugeben.

Auf der Empfangsseite der Gegenstelle, deren Elemente mit einem * bezeichnet sind, hat der Präambeldecoder 17* erkannt, auf welche Unterkanalbitrate und welches Synchronwort sich die Synchronisierung einstellen muß und veranlaßt den Präambelgenerator 9* nach Einrasten in den Synchronlauf ebenfalls zur Abgabe einer Quittung. Ankommende Daten werden über den Unterkanal-Demultiplexer 10* dem Datenausgang 16* zugeführt.

Wenn am Dateneingang 5 keine Daten mehr eintreffen, wird durch die Datenerkennung 7 in gleicher Weise der Abbau bzw. die Reduzierung des Unterkanals veranlaßt.

Durch die Verzögerungsschaltung 11 und den Schalter 13 wird verhindert, daß die zum Aufbau des Unterkanals und für andere Zwecke vorgesehenen Präambeln den Pulsdemodulator 14 erreichen, weil sonst dadurch im Sprachkanal ein Geräusch entstehen kann.

Eine Übertragung von Daten von der Gegenstelle zum Datenausgang 16 erfolgt in gleicher Weise.

Fig. 2 zeigt eine Anordnung nach Fig. 1 für Pulscodemodulation oder Pulsdeltamodulation, bei der alle Funktionen außer denen eines Analog-Digital-Umsetzers 2', des Mikrophons 3, eines Digital-Analog-Umsetzers 14', des Hörers 15, der Verzögerungsschaltung 11 und des Schalters 13 durch einen Mikroprozessor 19 des Typs SBC 80/20 und einen frei adressierbaren Festspeicher 20 (ROM = read only memory) ausgeführt werden.

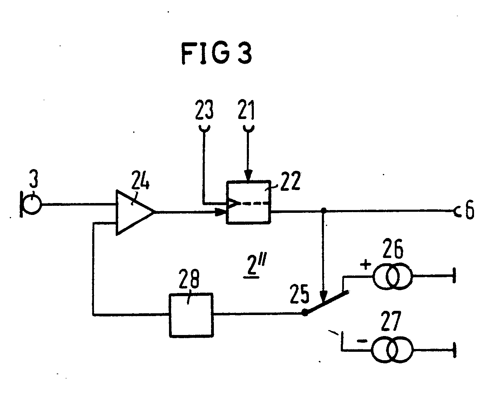

Fig. 3 zeigt einen Pulsdeltamodulator 2″, der anstelle des Analog-Digital-Umsetzers 2' in Fig. 2 eingesetzt werden kann. Der Pulsdeltamodulator 2″ enthält ein Flipflop 22 mit einem Datenbiteingang 21, der auch in Fig. 2 eingezeichnet ist, und mit einem Takteingang 23, einen Komparator 24, einen Umschalter 25, Stromquellen 26 und 27 sowie einen Integrator 28.

Die Wirkungsweise eines Pulsdeltamodulators ist bekannt. Der Komparator 24 vergleicht, ob die vom Integrator 28 abgegebene Referenzspannung größer oder kleiner als die vom Mikrophon 3 stammende Analogspannung ist. Je nachdem wird ein Puls an den Gesamtausgang 6 abgegeben oder nicht. Je nach dem Zustand aus Ausgang 6 wird über den Schalter 25 der Integrator 28 entweder von der Stromquelle 26 aufgeladen oder von der Stromquelle 27 entladen, in dem Sinne, daß die am Ausgang des Integrators auftretende Referenzspannung der vom Mikrophon 3 stammenden Analogspannung nachläuft. Die Dateneinfügung über das Flipflop 22 in der Rückkopplungsschleife zum Komparator 24 bewirkt, daß der Einfluß des Unterkanals auf die Sprachqualität besonders klein bleibt, weil die Störwirkung der Datenbits vom Pulsdeltamodulator 2″ selbsttätig korrigiert wird.

**Patentansprüche**

1. Nachrichtenübertragungssystem zur leitungsgebundenen und/oder drahtlosen Übertragung von Sprache, Musik, Text, Bildern oder Daten mit einem herkömmlichen Fernmeldenetz für analogue und gegebenenfalls auch abschnittsweise digitale Übertragung mit End- und Durchgangsvermittlungen (Analognetz), mit einem dem Analognetz überlagerten zusätzlichen Netz für reine Digitalübertragung mit eigenen Durchgangsvermittlungen (digitales Fernnetz), mit digitalen Endvermittlungen, die einerseits unmittelbar mit Analog-Digital- bzw, Digital-Analog-Umsetzern aufweisenden digitalen Teilnehmerstationen und andererseits für jede aufzubauende Verbindung, die über den Endvermittlungsbereich hinausgeht, entweder mit dem digitalen Fernnetz unmittelbar oder mit dem Analognetz über Analog-Digital- bzw. Digital-Analog-Umsetzer bzw. bei Anschluß an eine abschnittsweise Digitalübertragung über einen Codeumsetzer verbunden sind, und mit digitalen Teilnehmerstationen, die ständig oder zeitweise einen Teil des für die Sprachübertragung zur Verfügung stehenden Bitstroms für Datenübertragung und/oder Signalisierungszwecke ausnutzen, dadurch gekennzeichnet, daß in jeder digitalen Teilnehmerstation ein an die Stelle von Sprachbits Datenbits einfügender Unterkanal-Multiplexer (1) vorgesehen ist, wobei die Anzahl derartiger Datenbits von der jeweiligen Datentaktfrequenz abhängt, dessen erster Eingang über einen Pulsmodulator (2) mit einem Mikrofon (3), dessen zweiter Eingang über einen Pufferspeicher (4) mit einem Dateneingang (5) und dessen Ausgang mit dem Gesamtausgang (6) verbunden sind, daß eine Datentakterkennung (7) vorgesehen ist, deren Eingang mit dem Dateneingang (5) und deren Ausgang über einen Synchronwortgenerator (8) mit einem dritten Eingang des Unterkanal-Multiplexers (1) verbunden sind, daß ein Präambelgenerator (9) vorgesehen ist, dessen erster Eingang mit dem Ausgang der Datenerkennung (7) und dessen Ausgang mit dem Gesamtausgang (6) verbunden sind, daß ein Unterkanal-Demultiplexer (10) vorgesehen ist, dessen Eingang über eine Verzögerungsschaltung (11) mit dem Gesamteingang (12), dessen erster Ausgang über einen Schalter (13) und einen Pulsdemodulator (14) mit einem Hörer (15) und dessen zweiter Ausgang mit einem Datenausgang (16) verbunden sind, und daß ein Präambeldecoder (17) vorgesehen ist, dessen Eingang mit dem Gesamteingang (12), dessen erster Ausgang mit den Steuereingängen des Pufferspeichers (4) und des Schalters (13) und dessen zweiter Ausgang mit einem ersten Eingang eines Bit- und Worttaktgenerators (18), dessen zweiter Eingang mit dem Gesamteingang (12), dessen erster Ausgang mit den Takteingängen des Unterkanal-Demultiplexers (10), des Pulsmodulators (2) und des Pulsdemodulators (14) und dessen zweiter Ausgang mit einem zweiten Eingang des Präambelgenerators (9) verbunden sind (Fig. 1).

2. System nach Anspruch 1 für Pulscodemodulation oder Pulsdeltamodulation, dadurch gekennzeichnet, daß ein Mikroprozessor (19) und ein frei adressierbarer Festspeicher (20) vorgesehen sind, die die Funktionen des Unterkanal-Multiplexers (1), der Datentakterkennung (7), des Synchronwortgenerators (8), des Präambelgenerators (9), des Unterkanal-Demultiplexers (10), des Präambeldecoders (17) und der Bit- und Worttaktsynchronisierung (18) übernehmen (Fig. 2).

3. System nach Anspruch 2 für Pulsdeltamodulation, dadurch gekennzeichnet, daß ein Pulsdeltamodulator (2′) vorgesehen ist, in dessen Rückkoppelschleife eine Einkopplung (21) für die vom Mikroprozessor (19) kommenden Daten angeordnet ist (Fig. 3).

**Claims**

1. Communications transmission system for wired and/or wireless transmission of speech, music, text, images or data comprising a conventional telecommunications network for analogue and possibly also partially digital transmission with end exchanges and transit exchanges (analogue network), with an additional network for pure digital transmission having its own transit exchanges which is superimposed upon the analogue network (digital trunk network), with digital end exchanges which on the one hand are directly connected to digital subscriber stations which possess analogue-digital and digital-analogue converters, and on the other hand, in respect of each connection which is to be established and which extends beyond the end exchange zone, are connected either directly to the digital trunk network or to the analogue network via analogue-digital converters and digital-analogue converters or in the event of connection to a sectionwise digital transmission are connected via a code converter, and with digital subscriber stations which either continuously or periodically exploit part of the bit flow available for speech transmission for purposes of data transmission and/or signalling purposes, characterised in that each digital subscriber station contains a subchannel multiplexer (1) which inserts data bits in place of speech bits, where the number of such data bits depends upon the relevant data clock pulse frequency, the first input of which multiplexer is connected via a pulse modulator (2) to a microphone (3), whose second input is connected via a buffer store (4) to a data input (5), and whose output is connected to the overall output (6), that a data clock pulse recognition unit (7) is provided, whose input is connected to the data input (5), and whose output is connected via a synchronous word generator (8) to a third input of the sub-channel multiplexer (1), that a preamble generator (9) is provided whose first input is connected to the output of the data recognition unit (7) and whose output is connected to the overall output (6), that a sub-channel demultiplexer (10) is provided whose input is connected via a delay circuit (11) to the overall input (12), whose first output is connected via a switch (13) and via a pulse demodulator (14) to an earphone (15) and whose second output is connected to a data output (16), and that a preamble decoder (17) is provided whose input is connected to the overall input (12), whose first output is connected to the control inputs of the buffer store (4) and of the switch (13), and whose second output is connected to a first input of a bit- and word clock pulse- generator (18) whose second input is connected to the overall input (12), whose first output is connected to the clock pulse inputs of the sub-channel demultiplexer (10), of the pulse modulator (2) and of the pulse demodulator (14), and whose second output is connected to a second input of the preamble generator (9) (Fig. 1).

2. System as claimed in claim 1 for pulse code modulation or pulse delta modulation, characterised in that a microprocessor (19) and a freely addressable ROM (20) are provided which undertake the functions of the sub-channel multiplexer (1), the data clock pulse recognition unit (7), the synchronous word generator (8), the preamble generator (9), the sub-channel demultiplexer (10), the preamble decoder (17) and the bit- and word-clock pulse synchronisation unit (18) (Fig. 2).

3. System as claimed in claim 2 for pulse delta modulation, characterised in that a pulse delta modulator (2') is provided whose feedback loop contains an input coupling (21) for the items of data emanating from the microprocessor (19) (Fig. 3).

**Revendications**

1. Système de transmission d'informations pour la transmission sur circuits par fil ou sand fil de la parole, de la musique, de textes, d'images ou de données au moyen d'un réseau de télécommunications courant pour la transmission analogique et, éventuellement, également par sections, numérique avec des bureaux locaux et de transit (réseau analogique), du type comportant, superposé au réseau analogique, un réseau supplémentaire pour une transmission purement numérique avec des bureaux de transit qui lui sont propres (réseau interurbain numérique), avec des bureaux locaux numériques, qui sont reliés, d'une part, directement à des postes d'abonnés numériques comportant des convertisseurs analogique-numérique et numérique-analogique et, d'autre part, pour chaque liaison à établir et allant au-delà de la zone du bureau local, soit directement au réseau interurbain numérique, soit au réseau analogique par l'intermédiaire du convertisseur analogique-numérique ou numérique-analogique, en cas de raccordement à une transmission numérique par sections, par un convertisseur de codes, et avec des postes d'abonnés numérique qui utilisent en permanence ou de temps en temps une partie du flux de bits disponibles pour la transmission de la parole, pour la transmission de données et/ou pour la signalisation, caractérisé par le fait que dans chaque poste d'abonné numérique est prévu un multiplexeur de sous-canal (1) insérant des bits de données à la place de bits de parole, le nombre de tels bits de données dépendant de la fréquence de cadence des données, multiplexeur dont la première entrée est reliée par l'intermédiaire d'un modulateur d'impulsions (2) à un microphone (3), dont la seconde entrée est reliée par l'intermédiaire d'une mémoire-tampon (4) à une entrée des données et dont la sortie est reliée à la sortie générale (6), qu'il est prévu un dispositif d'identification des données (7) dont l'entrée est reliée à l'entrée des données (5) et dont la sortie est reliée par l'intermédiaire d'un générateur de mots de synchronisation (8) à une troisième entrée du multiplexeur de sous-canal (1), qu'il est prévu un genérateur de préambule (9) dont la première entrée est reliée à la sortie du dispositif d'identification de données (7) et dont la sortie est reliée à la sortie générale (6), qu'il est prévu un démultiplexeur de sous-canal (10) dont l'entrée est reliée par l'intermédiaire d'un circuit à retard (11) à l'entrée générale (12), dont la première sortie est reliée par l'intermédiaire d'un commutateur (13) et d'un démodulateur d'impulsions (14) à un écouteur (15) et dont la seconde sortie est reliée à la sortie des données (16), et qu'il est prévu un décodeur de préambule (17) dont l'entrée est reliée à l'entrée générale (12), dont la première sortie est reliée aux entrées de commande de la mémoire-tampon (4) et du commutateur (13) et dont la seconde sortie est reliée à une première entrée d'un générateur de cadence de bits et de mots (18) dont la seconde entrée est reliée à l'entrée générale (12, dont la première sortie est reliée aux entrées de cadence du démultiplexeur de sous-canal (10), du modulateur d'impulsions (2) et du démodulateur d'impulsions (14), et dont la seconde sortie est reliée à une seconde entrée du générateur de préambule (9) (figure 1).

2. Système selon la revendication 1 pour la modulation par impulsions codées ou pour la modulation d'impulsions différentielle, caractérisé par le fait qu'il est prévu un microprocesseur (19) et une mémoire morte (20) librement adressable, ledit microprocesseur et ladite mémoire prenant en charge les fonctions du multiplexeur de sous-canal (1), du dispositif d'identification des données (7), du générateur de mot de synchronisation (8), du générateur de préambule (9), du démultiplexeur de sous-canal (10), du décodeur de préambule (17) et de la synchronisation de la cadence des bits et des mots (18) (figure 2).

3. Système selon la revendication 2 pour une modulation d'impulsions différentielle, caractérisé par le fait qu'il est prévu un modulateur d'impulsions différentiel (2'), dans la boucle de réaction duquel est prévu un dispositif (21) pour le couplage des données provenant du microprocesseur (19) (figure 3).

FIG 1

FIG 2

# FIG 3